# EUROPEAN PATENT APPLICATION

(11) **EP 1 245 713 A1**
(43) Date of publication of application: **02.10.2002**
(21) Application number: 01107357.4
(22) Date of filing: 26.03.2001
(51) Int. Cl.: D06F 39/00, A47L 15/46, G01N 21/53

(54) **Sensor to measure the properties of a gaseous or liquid medium**

(30) Priority: 26.03.2001 DE 10021212
(71) Applicant: WHIRLPOOL CORPORATION, Benton Harbor Michigan 49022 (US)
(72) Inventor: Baltes, Reinhold, V.le G. Borghi 27, 21025 Comerio (IT); Loch, Christian, V.le G. Borghi 27, 21025 Comerio (IT); Jung, Clemens, V.le G. Borghi 27, 21025 Comerio (IT)
(74) Representative: Guerci, Alessandro

(57) **Abstract**

The invention concerns a sensor to measure the properties of a gaseous or liquid medium, especially the turbidity and foam of a clothes washing or dishwashing liquid in a clothes washer or dishwasher with at least one first radiation source, a radiation receiver and a transparent sensor body as a housing with an optical boundary surface, whereby the first radiation source generates a light beam of which one part falls on the boundary surface of the sensor body below the critical angle for total reflection and one part falls above the critical angle for total reflection, and the radiation receiver emits different measuring signals for water, air or foam as a medium, and the sensor also has an additional radiation source to detect the transparency of the medium that guides radiation through the medium. To dispense with a separate temperature sensor for measuring the temperature of the monitored medium, the invention provides that the sensor body has an additional seat for a temperature sensor that extends into the area with the medium and that measures the temperature of the medium.

## Description

The invention concerns a sensor to measure the properties of a gaseous or liquid medium, especially the turbidity and foam of a clothes washing or dishwashing liquid in a clothes washer or dishwasher with at least one first radiation source, a radiation receiver and a transparent sensor body as a housing with an optical boundary surface, whereby the first radiation source generates a light beam of which one part falls on the boundary surface of the sensor body below the critical angle for total reflection and one part falls above the critical angle for total reflection, and the radiation receiver emits different measuring signals for water, air or foam as the medium, and the sensor also has an additional radiation source to detect the transparency of the medium that guides radiation through the medium.

Such an optical sensor is prior-art in DE 198 31 688 A1. This optical sensor measures the transparency of the medium and its generated foam so that different measuring signals are obtained that are used for process control depending on the soiling of the medium. This is important when optical sensors are used for clothes washers or dishwashers since it allows the process, i.e., the changes in the programs, to be optimized in regard to time, water and energy.

Not just the optical properties of the medium in the clothes washer or dishwasher tubs are important for the process, the temperature of the medium is also important. For this reason, temperature sensors are used that measure the temperature of the medium separately from the optical sensor.

The use of two separate sensors requires more components, and attaching them and coupling them to the medium to be detected requires additional installation effort and attachment parts.

The problem of the invention is to create a sensor of the initially-cited type that can be used to detect the optical and thermal properties of the monitored medium.

This problem is solved according to the invention in that the sensor body has an additional seat for a temperature sensor that extends into the medium area and measures the temperature of the medium.

The integration of a temperature sensor into an optical sensor creates a unit with a few components that can be installed in a washing machine or dishwasher with a minimum amount of effort and few attachment parts. All sensors are in the sensor body that is used as the sensor housing.

In one embodiment, the seat is designed as a spike of the sensor body that detects a temperature-dependent resistance as a temperature sensor. The spike of the sensor body extends far enough into the monitored medium to measure its temperature. An advantage is that the temperature sensor is embedded in cast resin in the spike and held at the end of the seat. The temperature sensor can be fixed such that the temperature sensor is held by a holder at the end of the seat, and the holder is connected to a printed circuit board that is received by the sensor body designed as the housing.

The design of the sensor is further simplified when the radiation source and radiation receiver are on the printed circuit board and are wired.

The electrical connection of the sensor is simplified in that the temperature sensor is connected to the printed circuit board, and the connections of the printed circuit board are connected to a socket that is fixed in a sealing panel that seals the sensor body. The printed circuit board can of course bear some of the electrical evaluation or measuring circuit.

One development is characterized in that the sensor components are designed as SMD components. These can be automatically positioned in a particularly precise manner with the ideal radiation angle.

Installation in a clothes washer or dishwasher tub of a clothes washer or dishwasher is improved in another embodiment where the sensor housing consisting of the sensor body and sealing plate can be tightly inserted in a penetration of the clothes washer or dishwasher tub of the clothes washer or dishwasher by means of a sealing ring.

The invention will be further explained with reference to exemplary embodiments portrayed in the drawings. Shown are:
- Fig. 1: An optical sensor according to DE 198 31 688 A1 provided with a temperature sensor, and
- Fig. 2: A sensor with a printed circuit board and a temperature sensor held differently.

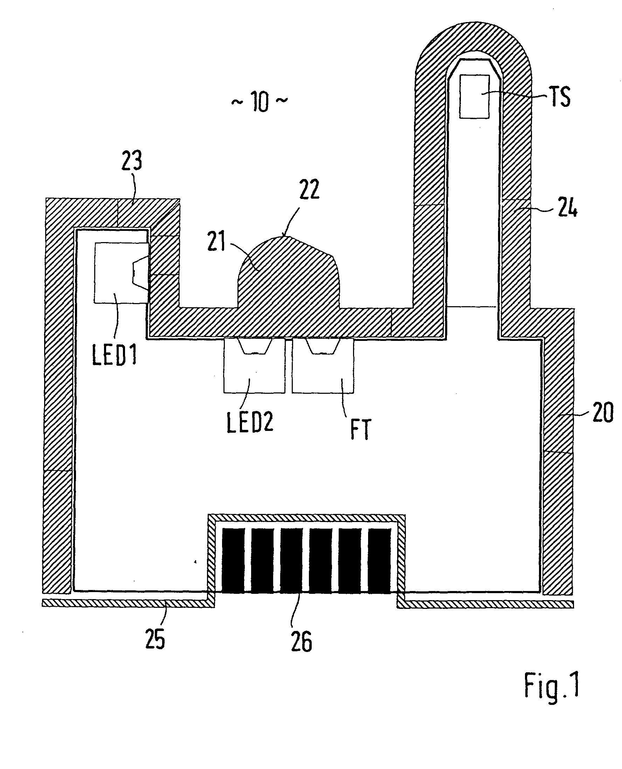

With the sensor in Fig. 1, the transparent sensor body 20 and sealing plate 25 form a sensor housing that receives all the sensors. 10 indicates an area holding the medium whose optical and thermal properties are to be measured. A part of the sensor body 20 is designed as a lens 21 with a boundary surface 22. The lens 21 is flat on the side opposite the boundary surface 22. The first radiation source is a light-emitting diode LED2 and a phototransistor FT as the radiation receiver on this flat surface. The light beam of the light-emitting diode LED2 is wide and returns to the phototransistor FT depending on the refractive index factor at the boundary surface 22 and/or the reflection from the foam bubbles of the medium. The phototransistor FT therefore emits a different measuring signal depending on the water, air or foam like e.g. the prior-art optical sensor in DE 42 42 927 A1.

Next to the lens 21, the sensor body 20 forms a chamber 23 that also extends into the area 10 with the medium and holds a light-emitting diode LED1 as an additional radiation source. The light-emitting diode LED1 is inserted so that its radiation passes through the medium and contacts the boundary surface 22 of the lens 21. The radiation is attenuated more or less depending on the turbidity of the medium so that only a part is reflected off the boundary surface 22 and is fed to the phototransistor FT as a radiation receiver. The reflected component of the radiation decreases as the soiling of the medium increases so that the radiation receiver provides a measuring signal that depends on the degree of soiling.

Since only a single radiation receiver is used, the light-emitting diodes LED1 and LED2 are sequentially turned on and off so that the phototransistor FT provides corresponding measuring signals by time-division multiplex. To detect the transparency, the additional radiation source consisting of the light-emitting diode LED1 can be assigned to a separate radiation receiver that is preferably also in the sensor housing. The measuring signals for medium transparency and reflection are then provided simultaneously.

The sensor body 20 has a seat 24 that is designed as a spike that extends sufficiently into the area 10 with the medium. At the end of the seat area of the spike 24 is a temperature sensor TS in the form of a temperature-dependant resistor NTC or PTC that is embedded in cast resin and held in this position. The sealing plate 25 seals the sensor housing and accepts a socket 26 to which are connected the light-emitting diodes LED1 and LED2, the phototransistor FT and the temperature sensor TS. This plug connection allows the sensor to be easily connected to the electrical measuring and evaluation circuits of the process control.

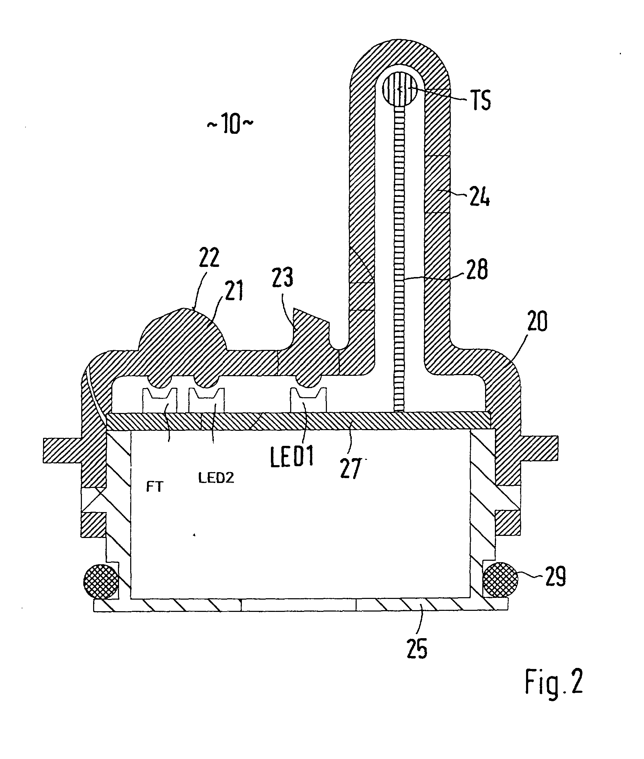

As shown in the exemplary embodiment in Fig. 2, the light-emitting diode LED1 provided to measure transparency can also be assigned a light guide 23 of the sensor body 20 that deflects the radiation of the light-emitting diode LED1 toward the boundary surface 22 of the lens 21. The reflected part of the radiation can be guided to the single radiation receiver or an assigned additional radiation receiver outside of the sensor body 20. Time-division multiplex or parallel operation is also possible in this case for detecting medium transparency and reflection.

The light-emitting diodes LED1 and LED2 and the phototransistor FT are located on a printed circuit board 27 and wired. The temperature sensor TS is held in position with a holder 28 in the spike 24. The holder 28 is supported on the printed circuit board 27 or is connected to it. The printed circuit board 27 is held by the sealing element 25 in the sensor body 20, and the sealing element 25 can be snap-locked to the sensor body 20. It bears a sealing ring 29 around its perimeter so that the sensor housing can be tightly inserted in a penetration of the clothes washer or dishwasher tub of a clothes washer or dishwasher. The temperature sensor TS is connected to the printed circuit board 27 and guided to a socket in the sealing element 25 like the elements of the optical sensor. Parts of the measuring and evaluation circuits can be on the printed circuit board 27 and wired.

The optical indication of whether water or air is in the shaft of the dishwasher serves as a safety control and determines if water can be supplied or pumped out. The circulation pump and heater cannot be operated without water for safety reasons.

## Claims

1. A sensor to measure the properties of a gaseous or liquid medium, especially the turbidity and foam of a clothes washing or dishwashing liquid in a clothes washer or dishwasher with at least one first radiation source, a radiation receiver and a transparent sensor body as a housing with an optical boundary surface, whereby the first radiation source generates a light beam of which one part falls on the boundary surface of the sensor body below the critical angle for total reflection and one part falls above the critical angle for total reflection, and the radiation receiver emits different measuring signals for water, air or foam as a medium, and the sensor also has an additional radiation source to detect the transparency of the medium that guides radiation through the medium,
**characterized in that**
the sensor body (20) has an additional seat (24) for a temperature sensor (TS) that extends into the area with the medium (10) and that measures the temperature of the medium (10).

2. A sensor according to claim 1,
**characterized in that**
the seat (24) is designed as a spike of the sensor body (20) that receives a temperature-dependent resistor (NTC or PTC) as the temperature sensor (TS).

3. A sensor according to claim 1 or 2,
**characterized in that**
the temperature sensor (TS) is embedded in the spike (24) in cast resin and is held in the end of the seat (24).

4. A sensor according to claim 1 or 2,
**characterized in that**
the temperature sensor (TS) is held with a holder (28) in the end of the seat (24), and
the holder (28) is connected to a printed circuit board (27) that is received by the sensor body (20) designed as the housing.

5. A sensor according to one of claims 1 - 4,
**characterized in that**
the radiation sources (LED1, LED2) and the radiation receiver (FT) are on the printed circuit board (27) and are wired.

6. A sensor according to one of claims 1 - 5,
**characterized in that**
the temperature sensor (TS) is connected to the printed circuit board (27), and the connections of the printed circuit board (27) are connected with a socket (26) that is fixed in a sealing plate (25) sealing the sensor body (20).

7. A sensor according to one of claims 1 - 6,
**characterized in that**
the sensor housing consisting of the sensor body (20) and sealing plate (25) can be tightly inserted in a penetration of the clothes washer or dishwasher tub of the clothes washer or dishwasher by means of a sealing ring (29).

8. A sensor according to one of claims 1 - 7,
**characterized in that**
the sensor components are designed as SMD components (surface-mounted device).
